# EUROPÄISCHE PATENTSCHRIFT

(11) **EP 1 362 716 B1**
(45) Veröffentlichungstag und Bekanntmachung des Hinweises auf die Patenterteilung: **07.06.2006**
(21) Anmeldenummer: 03450088.4
(22) Anmeldetag: 16.04.2003
(51) Int. Cl.: B60C 23/00

(54) **Einrichtung für die automatische Betätigung einer Reifenfüllanlage für Kraftfahrzeuge**
Method for the automatic operation of a tire inflation device for motor vehicles
Procédé pour actionner automatiquement un système de gonflage de pneus de véhicules automobiles

(30) Priorität: 14.05.2002 AT 7342002
(43) Veröffentlichungstag der Anmeldung: 19.11.2003
(73) Patentinhaber: Steyr-Daimler-Puch Spezialfahrzeug GmbH, 1110 Wien (AT)
(72) Erfinder: Skoff, Gerhard, Dipl.-Ing. Dr., 1230 Wien (AT); Christely, Heinz, Ing., 2125 Neubau (AT)
(74) Vertreter: Rippel, Andreas

(56) Entgegenhaltungen:
- EP-A- 0 504 913
- WO-A-03/016078
- AT-B- 408 867
- DE-A- 4 009 687

## Beschreibung

Die Erfindung bezieht sich auf eine Einrichtung für die automatische Betätigung einer Reifenfüllanlage für Kraftfahrzeuge, mit einer Steuerelektronik, die über Sensoren den Fahrzustand und den Reifendruck aller Reifen ermittelt und pneumatische Ventile sowie einen Kompressor ansteuert, um den Reifendruck den jeweiligen Gegebenheiten, wie Fahrgeschwindigkeit, Beladung, Fahrbahnzustand, Gelände, u.s.w. anzupassen, wobei der Kompressor in einem im normalen Betriebszustand gegenüber der Atmosphäre geschlossenen System zwischen den Reifen und einem Druckreservoir angeordnet ist.

Eine Einrichtung für die automatische Betätigung einer Reifenfüllanlage für Kraftfahrzeuge ist z.B. in der AT 408 867 B beschrieben. Dabei wird im Wesentlichen die Fahrgeschwindigkeit des Fahrzeuges und der aktuelle Reifendruck gemessen und der Sollwert des Reifendrucks ermittelt, und bei Abweichung des Istwerts vom Sollwert werden die Füll- bzw. Entleerventile bis zum Erreichen des Sollwerts des Reifendruckes angesteuert.

Die für das Füllen erforderliche Luft wird von einem Kompressor aus der atmosphärischen Umgebung angesaugt und komprimiert, das Ablassen der Luft bei einer Druckreduktion erfolgt ebenfalls in das Freie.

Der kritische Betriebszustand einer automatischen Reifendruckregelung ist das Befüllen, da ein für die jeweilige Fahrgeschwindigkeit zu geringer Reifendruck einen sicherheitskritischen Fahrzustand darstellt. Eine hinreichende Auslegung eines Vorratsspeichers gewährleistet zwar im Prinzip die Automatik, bei mehreren kurzfristig hintereinander liegenden wechselnden Regelvorgängen kann dieser Vorrat jedoch rasch erschöpft werden, was einen Eingriff in das Motormanagement nach sich ziehen müßte, um die Fahrsicherheit nicht zu gefährden.

Um diesen kritischen Betriebszustand möglichst zu vermeiden wurde schon vorgeschlagen, daß der Kompressor in einem normalerweise geschlossenen System zwischen den Reifen und einem Druckreservoir angeordnet ist. Dabei war zwischen dem als Reserverad ausgebildeten Druckreservoir und dem Kompressor ein 3/2-Wege-Magnetventil angeordnet. Dieses Magnetventil mußte eigens gesteuert werden, was den Aufbau und den Betrieb der Einrichtung komplizierter machte.

Die Erfindung hat es sich zum Ziel gesetzt, eine Einrichtung der eingangs genannten Art zu vereinfachen, was dadurch erreicht wird, daß der Kompressor mit dem Druckreservoir über eine direkte Verbindungsleitung ohne Schaltelemente verbunden ist.

Bei einem erfindungsgemäßen geschlossenen System wird die Füllleistung bei gleichbleibender Kompressorleistung wesentlich angehoben, da die Kompressorleistung lediglich dazu dient, die vorhandene Gasmenge zwischen zwei geschlossenen Reservoirs auf unterschiedlichem Druckniveau zu verschieben, und die Enthalpie des aus dem Reifen zu entnehmenden Gases beim Druckablassen im System erhalten bleibt und nicht durch den Kompressor erneut zugeführt werden muss. Dabei ist keine Steuerung eines zwischen Kompressor und dem Druckreservoir angeordneten Schaltelementes erforderlich.

Das geschlossene System, bei dem ein vorhandenes, geschlossenes Gasvolumen zwischen Reifen und Vorratsbehälter mittels eines Kompressors verschoben wird, weist darüber hinaus mehrere wesentliche Vorteile gegenüber einem offenen System auf, bei dem Frischluft zum Befüllen angesaugt wird und beim Druckreduzieren die Reifenluft in die Atmosphäre abgelassen wird:
a. Aufgrund des geschlossenen Systems kann auch mit beliebigen anderen Gasen als Luft gearbeitet werden, spezielle Reifengase zur Unterstützung der technologischen und der Komforteigenschaften des Reifens können verwendet werden.
b. Aufgrund des geschlossenen Systems kann der ansonsten erforderliche Lufttrockner entfallen, der zusätzliche Kosten verursacht und zusätzlichen Bauraum beansprucht.
c. Die Ventilanordnung kann wesentlich vereinfacht werden, da durch das geschlossene System keine Ventilkombination zur Abgrenzung des Systems nach außen erforderlich ist.
d. Der geräuschvolle Ablassvorgang der Reifenluft ins Freie entfällt, was die Komfortfunktion des Systems wesentlich verbessert.

Das geschlossene System hat auf der anderen Seite einen Nachteil, den es entsprechend zu kompensieren gilt. Geringfügige Leckagen sind in einem pneumatischen System mit zahlreichen Anschlüssen, Ventilen und Dichtungen unvermeidlich. Das geschlossene System besitzt nicht die systemimmanente Eigenschaft, Leckagen durch von außen angesaugte Frischluft zu kompensieren.

Erfindungsgemäß können jedoch Leckageverluste durch eine einfach zu wechselnde Zusatzpatrone, die z.B. mit verflüssigtem Reifengas gefüllt ist, ausgeglichen werden, die bei Überschreiten eines kritischen Befüllungsstandes automatisch den Füllgrad wieder auf Sollstand bringt.

Weiters kann in einem geschlossenen System ein schleichender Druckverlust durch einen defekten Reifen nicht ausgeglichen werden, da aufgrund der Auslegungskriterien kein Potential für einen zusätzlichen Druckvorrat gegeben ist. Um dieses zusätzliche Sicherheitspotential, das eine automatische Reifendruckregelung bereitstellen kann, auch auszuschöpfen, soll die Einrichtung erfindungsgemäß bei einem erkannten diesbezüglichen Notfall auf eine Frischluftversorgung umgeschalten werden. Ebenso kann diese Funktion in Kraft treten, wenn die zuvor beschriebene Druckvorratspatrone erschöpft und nicht rechtzeitig ersetzt wurde. Über das auf Frischluftversorgung umschaltende Ventil kann ebenfalls die Entlüftung des Leitungssystems und vor allem der Drehdurchführungen zu den Rädern bzw. Reifen erfolgen.

Diese Entlüftung des Leitungssystems kann auch durch ein zusätzliches variables Luftvolumen erfolgen, das zur Entlüftung soweit vergrößert wird, dass die pneumatischen Leitungen weitgehend entspannt werden, und bei einem Füll- oder Druckreduziervorgang der Reifen dieses Volumen durch eine äußere Energieeinbringung wieder auf minimales Volumen komprimiert wird, um das Gasvolumen der Leitungen wieder dem System zuzuführen. Der Antrieb dieses variablen Volumens kann z.B. elektrisch erfolgen.

Nachstehend ist die Erfindung anhand eines in den Zeichnungen dargestellten Ausführungsbeispieles näher beschrieben, ohne auf dieses Beispiel beschränkt zu sein. Dabei ist das Schaltschema einer erfindungsgemäßen Einrichtung dargestellt, bei der die Druckinformation für die Reifendruckregelsystemelektronik von einer Sensorelektronik im Reifeninneren bereitgestellt wird. Die Reifendruckinformation kann auch anderweitig bereitgestellt werden, ebenso ist die Sensorik zur Erfassung des Fahrzustandes und zur Zuordnung des entsprechenden Reifensolldruckes nicht auf die Reifendruckinformation beschränkt.

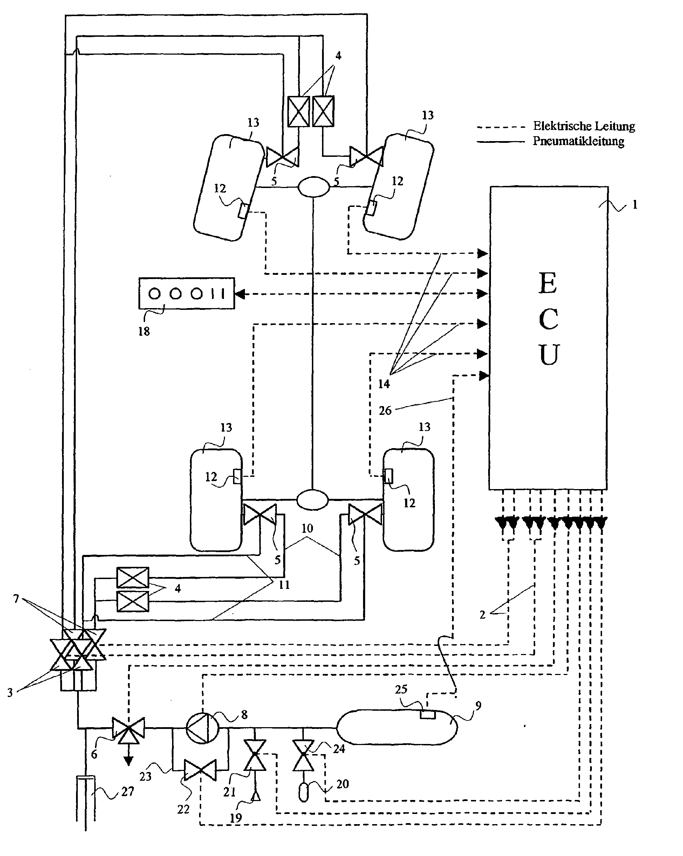

Die Zeichnung zeigt das hinter dem Reifendruckregelsystem gelegte pneumatische Schaltschema beispielhaft für eine achsweise Ansteuerung der Räder, jedoch kann das System auch für eine beliebige andere Ansteuerung, z.B. aller vier Räder einzeln oder in Abhängigkeit von der Achse rad- oder achsweise eingesetzt werden..

Die Steuerung erfolgt durch die zentrale Regelelektronik 1. Diese Elektronik 1 ist mit einem Sensorsystem verknüpft, das unter anderem den Beladungszustand, den Reifendruck, die Fahrgeschwindigkeit, die Bremse und den Fahrzustand überwacht und an die zentrale Regelelektronik kommuniziert. Eine vorzugsweise Fahrgeschwindigkeits- und Fahrzustandsüberwachung ist im Detail in der AT 408 867 B, bzw. in der österreichischen Patentanmeldung A 1274/2001, auf die hier besonders Bezug genommen werden, beschrieben. Die Reifendrucküberwachung ist Stand der Technik.

Wird nun aufgrund eines Logikbefehls, der durch eine Verknüpfung mit einem eingehenden Sensorsignal erfolgt, die Notwendigkeit zu einem Regelvorgang erkannt, schaltet die Elektronik 1 die Pneumatikelemente wie folgt:

Erfolgt ein Schaltbefehl aufgrund einer Überschreitung der in den Regelkennfeldern jeweils vorgegebenen Schaltwerte zur Druckerhöhung in einem oder in mehreren Reifen oder Regelkreisen, werden über die elektrischen Steuerleitungen 2 die vorzugsweise elektromagnetisch betätigten Steuerventile 3 geöffnet. Das komprimierte Gas strömt über die Steuergasleitungen 11 und die Steuergasdurchführung des Dichtpaketes 4 zu den Radventilen 5 und öffnet die Ventile für die Füllung. Gleichzeitig werden das 3-Wegeventil 6 durchgeschaltet und die Füllventile 7 der jeweiligen Räder oder Regelkreise geöffnet, über die nun über den Kompressor 8 bzw. bei entsprechend vorhandener Drucküberhöhung im Vorratsbehälter 9, die über den Drucksensor 25 und die Datenleitung 26 an die Steuerelektronik gemeldet wird, über den Bypass 23 und das Bypassventil 22 aus dem Druckreservoir 9 das Gas zur Reifendruckerhöhung durch die Füllleitungen 10 und die Füllgasdurchführung des Dichtpaketes 4 über das Radventil 5 in die jeweiligen Reifen 13 strömt.

Das 3-Wegeventil 6 in dieser Anordnung hat den Zweck, eine Weiche für das Reifenfüllsystem darzustellen, damit der Kompressor 8 und der Gasvorrat im Druckkessel 9 auch für andere Zwecke, z.B. einer Gasfeder, genutzt werden kann.

Da das Volumen der Reifen 13 sehr groß ist im Vergleich zum Innenvolumen der Fülleitungen 10, und die Druckänderung im Reifen relativ langsam vor sich geht, kann der Reifeninnendruck messtechnisch als quasistatisch gesehen werden, und nur durch Messung des statischen Druckanteils des Gases ein hinreichend genauer Wert ermittelt werden. Die Radelektronik 12 mit dem zugehörigen Drucksensor des Reifendruckkontrollsystems im Radinneren ermittelt kontinuierlich den jeweiligen Druckwert und gibt ihn über die elektrische Steuerleitung 14 an die zentrale Steuerelektronik 1 weiter, die bei Erreichen des Sollwertes den Füllvorgang unterbricht, indem die Ansteuerung der Steuerventile 3, der Füllventile 7 und des Dreiwegeventil 6 beendet wird. Damit schließt auch das pneumatisch betätigte Radventil 5. Anschließend werden alle pneumatischen Leitungen 10, 11 über das Ventil 21 und den Schalldämpfer 19 oder über ein eigenes Entlüftungssystem 27, z. B. ein extern betätigtes variables Volumen, entlüftet.

Erfolgt ein Schaltbefehl aufgrund einer Überschreitung der in den Regelkennfeldern jeweils vorgegebenen Schaltwerte zur Druckverminderung in einem oder in mehreren Reifen, wird derselbe Vorgang wie oben beschrieben in umgekehrter Richtung durchgeführt. Das Reifengas strömt bzw. wird durch den Kompressor 8 in umgekehrter Richtung vom Reifen 13 über das Radventil 5, die Fülleitungen 10, die Füllventile 7, das Ventil 6 und in das Druckreservoir 9 gefördert. Der Abschaltbefehl wird ebenfalls durch das entsprechende Sensorsignal der Radelektronik 12 an die zentrale Steuerelektronik 1 bei Erreichen des Solldruckes gegeben.

Über eine entsprechende Anzeige 18 kann der Fahrer über den jeweiligen Zustand der Reifen informiert werden. Mittels dieses Fahrerinformationssystems kann auch eine Defektwarnung erfolgen, oder die Information über die jeweilige, dem Beladungs- und Druckzustand der Reifen zugeordnete Fahrzeughöchstgeschwindigkeit erfolgen.

Leckageverluste können durch eine einfach zu wechselnde Zusatzpatrone 20, die mit dem selben Medium wie das geschlossene System, z.B. mit Luft oder einem speziellen Reifengas in verflüssigtem Zustand gefüllt ist, ausgeglichen werden, die bei Überschreiten eines kritischen Befüllungsstandes durch ein automatisches Öffnen des Ventils 24 den Füllgrad wieder auf Sollstand bringt.

Um einen schleichenden Druckverlust durch einen defekten Reifen auszugleichen, kann über ein Ventil 21 auf eine Frischluftversorgung umgeschalten werden. Ebenso kann diese Funktion in Kraft treten, wenn die Druckvorratspatrone 20 erschöpft und nicht rechtzeitig ersetzt wurde.

## Patentansprüche

1. Einrichtung für die automatische Betätigung einer Reifenfüllanlage für Kraftfahrzeuge, mit einer Steuerelektronik, die über Sensoren den Fahrzustand und den Reifendruck aller Reifen (13) ermittelt und pneumatische Ventile sowie einen Kompressor (8) ansteuert, um den Reifendruck den jeweiligen Gegebenheiten, wie Fahrgeschwindigkeit, Beladung, Fahrbahnzustand, Gelände, u.s.w. anzupassen, wobei der Kompressor (8) in einem im normalen Betriebszustand gegenüber der Atmosphäre geschlossenen System zwischen den Reifen (13) und einem Druckreservoir (9) angeordnet ist, **dadurch gekennzeichnet, daß** der Kompressor (8) mit dem Druckreservoir (9) über eine direkte Verbindungsleitung ohne Schaltelemente verbunden ist.

2. Einrichtung nach Anspruch 1, **dadurch gekennzeichnet, daß** Leckageverluste des geschlossenen Systems durch ein von der Steuerelektronik angesteuertes Ventil (24) und einer Wechselpatrone (20) mit dem Betriebsgas des geschlossenen Systems bei Überschreiten eines kritischen Befüllungsstandes automatisch ausgeglichen werden und der Füllgrad des geschlossenen Systems wieder auf Sollstand gebracht wird.

3. Einrichtung nach Anspruch 1 oder 2, **dadurch gekennzeichnet, daß** an das geschlossene System ein von der Steuerelektronik anzusteuerndes Ventil (21) angeschlossen ist, das auf Frischluftversorgung umschaltet.

4. Einrichtung nach Anspruch 1, 2 oder 3, **dadurch gekennzeichnet, dass** an das geschlossene System über ein von der Steuerelektronik anzusteuerndes 3-Wegeventil (6) Teile des Systems auch von anderen Systemen zur Druckgasversorgung verwendet werden können.

5. Einrichtung nach Anspruch 1 oder 2, **dadurch gekennzeichnet, daß** das pneumatische Leitungssystem des geschlossenen Systems über ein variables Zusatzvolumen, das zumindest dem Inhalt des Leitungssystems entspricht, entlüftet wird.

## Claims

1. A device for automatically actuating a tire inflation system for motor vehicles, with control electronics that determine the driving conditions and the tire pressure of all tires (13) with the aid of sensors, wherein said control electronics trigger pneumatic valves and a compressor (8) in order to adapt the tire pressure to the respective circumstances, for example, driving speed, load, road condition, terrain, etc., and wherein the compressor (8) is arranged between the tires (13) and a pressure reservoir (9) in a system that is closed relative to the atmosphere in the normal operating state, **characterized in that** the compressor (8) is connected to the pressure reservoir (9) via a direct connecting line without switching elements.

2. The device according to Claim 1, **characterized in that** leaks in the closed system are automatically compensated once the filling level drops below a critical value, namely by means of a valve (24) that is triggered by the control electronics and an exchangeable cartridge (20) containing the operating gas of the closed system, wherein the filling level of the closed system is restored to the nominal value.

3. The device according to Claim 1 or 2, **characterized in that** a valve (21) to be triggered by the control electronics is connected to the closed system and serves for switching over to fresh air supply.

4. The device according to Claim 1, 2 or 3, **characterized in that** a 3-way valve (6) to be triggered by the control electronics is connected to the closed system and makes it possible for parts of the system to be used as a compressed gas supply by other systems.

5. The device according to Claim 1 or 2, **characterized in that** the pneumatic line system of the closed system is ventilated with the aid of a variable additional volume that corresponds to at least the capacity of the line system.

## Revendications

1. Dispositif de commande automatique d'un système de gonflage de pneumatiques de véhicules automobiles, comportant une électronique de commande qui détecte l'état de conduite et la pression de gonflage de tous les pneumatiques (13) par l'intermédiaire de capteurs et qui commande des vannes pneumatiques ainsi qu'un compresseur (8) afin d'adapter la pression des pneumatiques aux conditions respectives, telles que vitesse de roulage, charge, état de la route, terrain, etc., le compresseur (8) étant disposé dans un système normalement fermé par rapport à l'atmosphère entre les pneumatiques (13) et un réservoir de pression (9) **caractérisé en ce que** le compresseur (8) est relié au réservoir de pression (9) par l'intermédiaire d'une conduite directe sans éléments de commutation.

2. Dispositif selon la revendication 1, **caractérisé en ce que**, en cas de dépassement d'un niveau de gonflage critique, les pertes par fuites du système fermé sont automatiquement compensées par une vanne (24) commandée par l'électronique de commande et une cartouche de rechange (20) avec le gaz de service du système fermé et **en ce que** le niveau de gonflage du système de gonflage est ramené à son niveau de consigne.

3. Dispositif selon la revendication 1 ou 2, **caractérisé en ce qu'**une vanne (21) commandée par l'électronique de commande et commutant sur une alimentation en air frais est raccordée au système fermé.

4. Dispositif selon les revendications 1, 2 ou 3, **caractérisé en ce que** des éléments du système fermé peuvent être utilisés par d'autres systèmes pour l'alimentation en gaz comprimé par l'intermédiaire d'une vanne 3 voies (6) commandée par l'électronique de commande.

5. Dispositif selon la revendication 1 ou 2, **caractérisé en ce que** le système de conduites pneumatiques du système fermé est purgé par un volume variable supplémentaire qui correspond au moins à la contenance du système de conduites.
